Europäisches Patentamt

European Patent Office

Office européen des brevets

(11) Publication number: **0 259 190 B1**

# EUROPEAN PATENT SPECIFICATION

(45) Date of publication of patent specification: **18.12.91**   (51) Int. Cl.⁵: **B65G 53/48**, E04B 1/76, B65G 53/40

(21) Application number: **87307857.0**

(22) Date of filing: **04.09.87**

(54) Method and apparatus for blowing mineral fibres.

(30) Priority: **05.09.86 GB 8621415**

(43) Date of publication of application: **09.03.88 Bulletin 88/10**

(45) Publication of the grant of the patent: **18.12.91 Bulletin 91/51**

(84) Designated Contracting States: **AT BE DE FR GB NL**

(56) References cited:
DE-A- 2 039 683
GB-A- 2 124 194
US-A- 3 529 870
US-A- 4 619 381

(73) Proprietor: **Rockwool Limited Pencoed Bridgend Mid Glamorgan CR35 6NY Wales(GB)**

(72) Inventor: **Rashbrook, George 92 Green Crescent Rowner Gosport Hants PO13 0DS(GB)**
Inventor: **Williams, Peter 3 Downsview Close Aberthin Cowbridge S. Glamorgan CF7 7HG Wales(GB)**
Inventor: **Rayner, John Pencoed Farm Cefn Carfan Road Bryncethin Mid Glamorgan Wales(GB)**

(74) Representative: **Lawrence, Peter Robin Broughton et al GILL JENNINGS & EVERY 53-64 Chancery Lane London WC2A 1HN(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

Mineral fibre insulation is customarily introduced into a cavity as a stream of fibres entrained in air. The stream of fibres is generated by a blowing machine to which the mineral fibres are initially supplied as a compressed mass. The machine must separate the fibres as much as possible since improved insulation results are obtained with increased degrees of separation.

A typical blowing machine comprises separating means for separating a mineral fibre mass into fibres and entraining means positioned for receiving separated fibres from the separating means and for entraining them into air.

The compressed mass may be lightly bonded throughout in which event a considerable amount of work has to be applied to the mass in order to break it initially into tufts and then to separate these tufts towards individual fibres. A suitable apparatus for this purpose is described in GB-A-2,103,695. In this the bonded compressed mass is broken into tufts by a bale breaker that comprises a pair of rotors rotating at, typically, 30 rpm in the base of a hopper, and the resultant tufts are then carried by a screw conveyor to a shredding chamber. The work done on the fibres in the bale breaker and the screw conveyor inevitably results in reduction of fibre length and this is undesirable. Also the described apparatus is prone to blockages and variable production rates, and this also is undesirable.

If the compressed mass is an unbonded mass of fibre tufts then less work need be applied to it. One form of apparatus is described in US-A-4,111,493. The compressed mass is carried by a single rotary conveyor in a hopper towards a shredding apparatus but this conveyor is prone to conduct unnecessary working on the fibres. Also, cavitation and blockages in the hopper and throughout the apparatus may occur. Accordingly the results are not entirely satisfactory.

In GB-A-2,124,194 a blowing machine of the type described in the pre-characterising clause of the claims herein is described. The hopper is provided with a conveyor of a particular construction and which sweeps substantially the entire depth of the hopper. Because of the depth of the conveyor it is difficult to avoid applying too much work to some of the mineral fibres and it is difficult to obtain a uniform rate of feed to the subsequent shredding apparatus if, as is generally convenient, the rate of feed to the hopper is non-uniform (e.g., due to occasional introduction of a bale).

The object of the present invention is to avoid the problems resulting from overworking of material in GB-A-2,124,194 including the non-uniform rates of feeding of material to the subsequent stations in the apparatus and the inadequate distribution of insulating material in the cavity.

In GB-A-1,282,959 handling apparatus for particulate material is disclosed comprising a hopper having two substantially parallel rotors at its base for sweeping material down from the hopper sides towards a centrally located outlet. The provision of a pair of channels in the hopper, each with a rotor, is intended to condition and dispense particulate material to allow it to flow through the hopper outlet. There is no suggestion that the density of the discharged material will be changed.

In US-A-3529870 feeding apparatus for particulate material is disclosed comprising a hopper having rotating means within its body to prevent material compaction, and a curved valve located between the hopper and a granulator to control the rate of feeding.

According to the invention, an apparatus for producing a stream of mineral fibres entrained in air comprises

separating means for separating a compressed mineral fibre mass into fibres and which comprise an elongated feed hopper for receiving the mass and that is closed at two sides and one end but is open at the other end and that includes a rotor for transport of fibres along the hopper and

entraining means positioned for receiving separated fibres from the separating means and for entraining them into air,

characterised in that the separating means comprise

a store chamber into which the open end of the hopper opens, and

a shredding chamber positioned to receive fibres from the store chamber and that includes one or more rotors for separating the fibres, and

the base of the hopper is formed of two or more substantially parallel channels that extend substantially between the ends of the hopper and that are each of substantially part-circular cross section,

and there is a rotor associated with each channel comprising one or more radially extending members that are of substantially the same radius as the channel and that are mounted for rotation substantially co-axial with the channel and that are shaped to transport the mineral fibres towards the open end of the hopper and into the store chamber upon rotation of the rotor.

The mass of fibres that is introduced into the feed hopper can be lightly bonded throughout but preferably is an unbonded mass of tufts of mineral fibres, the fibres in each tuft either being unbonded or, preferably, bonded. The unbonded mass of tufts may have been made by comminuting a bonded compressed bale or other mass, for instance by means of a conventional rotor or other shredding mechanism, but preferably the unbonded mass of tufts was made by comminuting a batt of fibres (optionally after bonding) and then compressing the resultant tufted product into a bale or other compressed mass.

The mineral fibres are generally of rock or slag but can be of glass.

The mass of fibres is generally introduced into the hopper through the top but optionally through an appropriate opening in the closed end.

The total depth of the hopper is preferably at least three times and generally at least four or even five times the radius of the rotors in the base of the hopper (or the radius of the larger of the rotors if they are of different size). This ensures that the side walls of the hopper extend substantially above the top of the rotors. The rotors should rotate relatively slowly, for instance below 20 rpm and generally from 5 to 15 rpm and this combination of slow rotation and a deep hopper means that the rotors will work substantially only on the fibres in the lower part of the hopper that is swept by the rotors, and that the fibres above this lower part are substantially unworked by the rotors. Thus the extent of working of any particular fibre tuft in the hopper is relatively low and is substantially independent of the depth to which the hopper is filled. Accordingly the hopper can be charged intermittently with a large volume of compressed fibres so as to give a substantially constant feed of fibres into the store hopper and without subjecting the entire mass of fibres to working throughout its duration in the hopper.

Substantially the entire base of the hopper is defined by the substantially parallel channels and since each of these has a rotor in it substantially the entire base of the hopper is swept by these rotors. Accordingly the risks of cavitation or blockages within the hopper are minimised. The side walls of the hopper preferably extend substantially vertically upwards from the outer edges of the outermost channels. They may extend inwardly, but if they extend outwardly the angle of inclination should preferably be sufficiently low, e.g., below 20° and preferably below 10°, to avoid the risk of cavitation or blockages occuring.

It is not necessary that the channels should have a truly circular cross section nor that each radially extending member should have exactly the same radius as its associated channel nor that each rotor should be exactly co-axial with its associated channel. However the shape of the cross section of the channels, the dimensions of the radially extending members and the axis of each rotor relative to the axis of its associated channel should all be such that the radially extending members sweep the surface of the channels and the base of the chamber sufficiently thoroughly to minimise, and preferably eliminate, the risk of any blockages or cavitation occuring along the base of the chamber. Accordingly it is preferred that each rotor is substantially coaxial with its associated channel and that each radially extending member should have substantially the same radius as the channel.

In order that the one or more radially extending members of a rotor can transport the fibres towards the open end of the hopper it is preferred that each rotor should extend along substantially the entire length of each channel and that the radially extending member or members should extend along substantially all the length of the rotor. The one or more members may be provided by a single helical screw having a configuration such as to move the fibres towards the open end of the chamber as the screw rotates but preferably there are plurality of the radially extending members, for instance the screw can be a discontinuous screw formed by a series of paddles. At the end of the rotor distant the closed end of the hopper, e.g., for the last quarter or more of the length of the rotor, the members may take the form of a series of radially extending pins.

The rotors provide a substantially constant feed of partially separated fibres into the store chamber from which these fibres are subsequently fed to the shredding chamber. The store chamber should include means for moving fibres within the store chamber towards the shredding chamber. These means are generally a rotor, often an extension of the rotor of the hopper. The store chamber provides a buffer zone in which the fibres can be accumulated prior to being shredded, thereby promoting substantially continuous feed of fibres to the shredding chamber even if the feed to the hopper is very irregular. Preferably the rotor or other moving means in the store chamber cause little or no working of the fibres during storage, so that their degree of separation is not greatly affected by variations in the length of storage.

A screen or other protective means is generally provided over the top of the store chamber to guard against the risk of feeding compressed fibres direct into the top of the chamber, instead of gradually into the side of the chamber from the hopper.

The shredding chamber can be a separate chamber connected to the store chamber by an aperture or other means for transporting the fibres into the shredding chamber but preferably the shredding chamber is a continuation of the store chamber. Generally the shredding chamber is beneath the store chamber. Thus the one or more rotors of the shredding chamber may be positioned in the base of a combined store and shredding chamber at a position below the level of the base of the hopper.

The shredding chamber can be of conventional construction such as the shredding or pelletising chambers in GB-A-2,103,695 or 2,124,194 or US-A-4,111,493, and from this shredding chamber the separated fibres can be fed, generally through an appropriate control gate, to air entraining means, for example as described in any of those patents.

Preferably however the shredding chamber serves also as a discharge chamber by which separated fibres can be discharged from the separating means (the hopper and shredder) to the air entraining means, that may include a secondary shredder for effecting further fibres separation and aeration of the fibres. Preferably the base of the discharge chamber is defined by a lower wall that defines an outlet that discharges into the entraining means and that controls the rate of flow of separated fibres into the entraining means, there are one or more rotors in the discharge chamber each comprising one or more rotatable members mounted for rotation about a substantially horizontal axis, and there is a value for varying the size of the outlet, and substantially all the lower wall of the discharge chamber is concave and is swept by some or all of the rotatable members as they rotate.

The separating means may consist solely of the hopper (if present) and the described discharge chamber which will then serve also as the shredding chamber, or there may be an additional shredding chamber between the discharge chamber and the hopper. If there is such an additional shredding chamber the discharge chamber normally contains two rotors but if the discharge chamber serves both for discharge and as the only shredding chamber before discharge into the air entrainment means, then it normally contains only one rotor.

The concave lower wall of the discharge chamber preferably has a substantially part-circular cross section and thus may be a substantially semi-cylindrical trough. The one or more rotatable members on the rotor should have substantially the same radius as the trough, e.g., from 75 to 100% of the radius of the trough, and should be mounted substantially co-axially with the trough in order that the rotatable member or members sweep the surface of the trough to be truly circular in cross section or for the rotatable member or members to be co-axially mounted with it or to have exactly the same radius as it, provided the arrangement is such that the member or members sweep the trough, and especially the outlet, sufficient to prevent cavitation or blockage within the discharge chamber. Generally the or each rotor is constructed so as to cause separation of compressed fibres.

The rotatable members in the discharge chamber are normally provided by one or more radially extending screws or other members, such as radially extending arms or bars but if their purpose is primarily to sweep the lower wall of the chamber, rather than to effect separation of the fibres, then they may have some other configuration, for instance forming an open mesh cylinder. If the screw does not have a member that extends along the length of the toro the members should be positioned such as to ensure that they prevent blockages in the opening.

The shape of the valve is such that the outlet is, like the remainder of the lower wall, swept by the rotatable member or members and so generally has a curved configuration substantially the same as the remainder of the wall.

If the discharge chamber does have side walls extending above the semi-cylindrical or other concave surface then these walls should not have any upwardly facing surface that is horizontal or that is outwardly inclined to an extent sufficient to be liable to cause cavitation or blockage. For instance no wall should be outwardly inclined by more than about 20° from the vertical. Preferably any such side wall is substantially vertical or is inwardly curved.

It is preferred in the invention that all side walls of chambers should be substantially vertical or inwardly inclined as described above and all base walls of chambers should be concave and should be swept by an appropriate rotatable member, as described.

The entrainment means may include a chamber for increasing the separation of fibres that have been received from the discharge chamber and this may be a secondary shredding chamber. This will generally contain at least two rotors each positioned to sweep a quarter-cylindrical base wall. The speed of rotation of the rotors in the secondary shredder is generally much higher than in the discharge chamber as this secondary chamber is intended to aerate the fibres. Typically for instance the rotor in the discharge chamber may rotate at 30 to 200, preferably 50 to 100 rpm while the rotors in the secondary shredder may rotate at 50 to 400 rpm, often in opposite directions and at different speeds. For instance one may rotate counter-clockwise at 70 to 250 rpm and the other may rotate clockwise at 70 to 250 rpm.

The entrainment means preferably comprise a rotary air lock positioned to receive fibres from the discharge chamber directly or indirectly (e.g., from the secondary shredding chamber) and comprising a cylinder into which air is fed and having a rotatable shaft with vanes mounted thereon to make a substantially airtight seal with the cylinder.

The preferred blowing apparatus of the invention consists, in use, of a hopper, a primary shredder fitted with a single rotor, a secondary shredder fitted with two rotors for aeration and further separation of the fibres, and the rotary air lock for final entrainment of the fibres. The curved gate valve or other valve for controlling the discharge of fibres may be between the secondary shredder (which thus serves as part of the separating means) and the rotary air lock but preferably is between the primary shredder (which thus serves as the discharge chamber) and the secondary shredder (which thus serves as part of the entraining means).

The apparatus of the invention can be used for blowing any of the conventional mineral fibres, for instance glass fibres or, especially, rock or slag fibres.

The invention is illustrated in the accompanying drawings in which:-

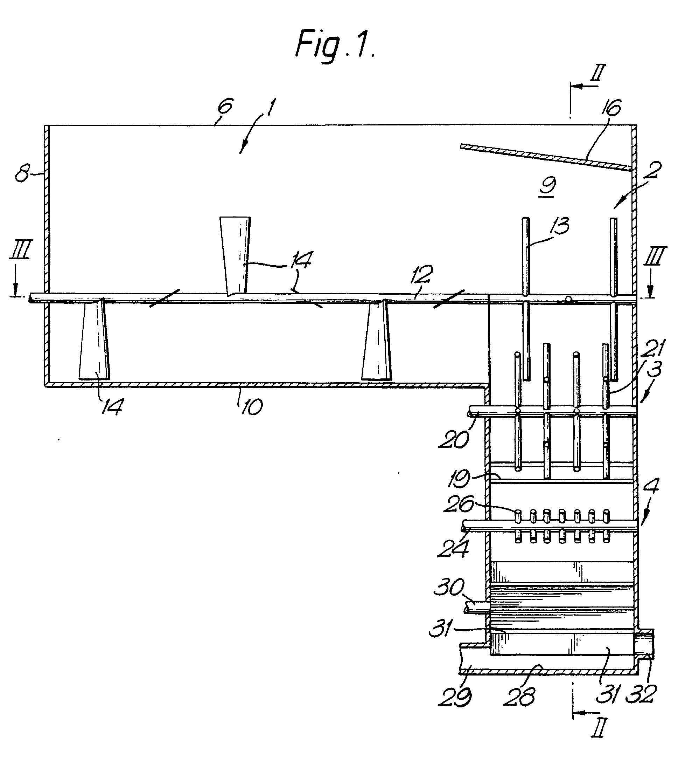

Figure 1 is a longitudinal vertical section of a blower according to the invention,

Figure 2 is a vertical section on the line II-II in Figure 1,

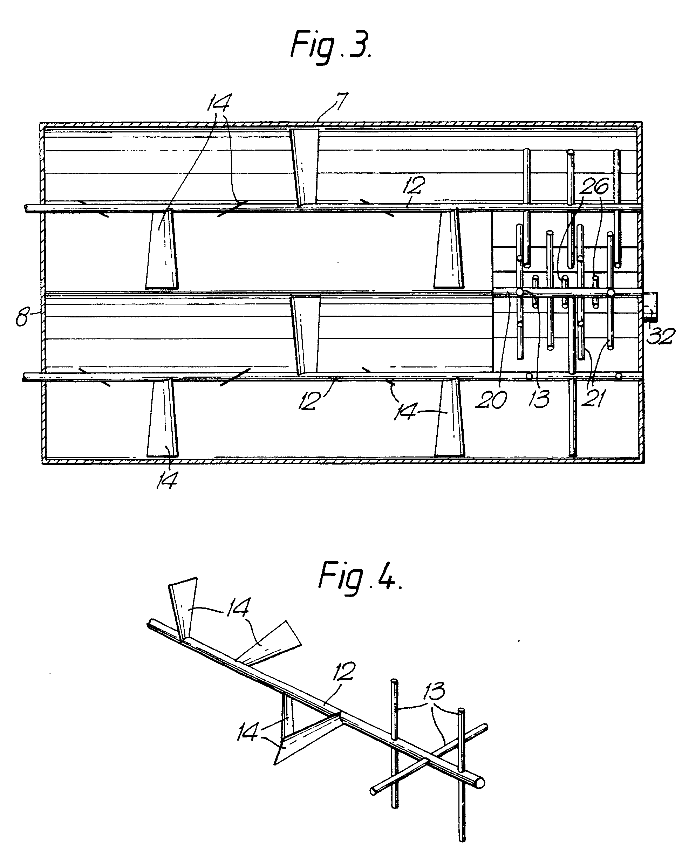

Figure 3 is a horizontal section on the line III-III in Figure 1, and

Figure 4 is a perspective view of the rotor used in the hopper of Figure 1.

The apparatus comprises a hopper 1, a store chamber 2, a shredder and discharge chamber 3, a secondary shredder 4, and rotary air lock 5.

The hopper 1 has an open top 6, side walls 7 and an end wall 8 and at its opposite end 9 it opens into the store chamber 2.

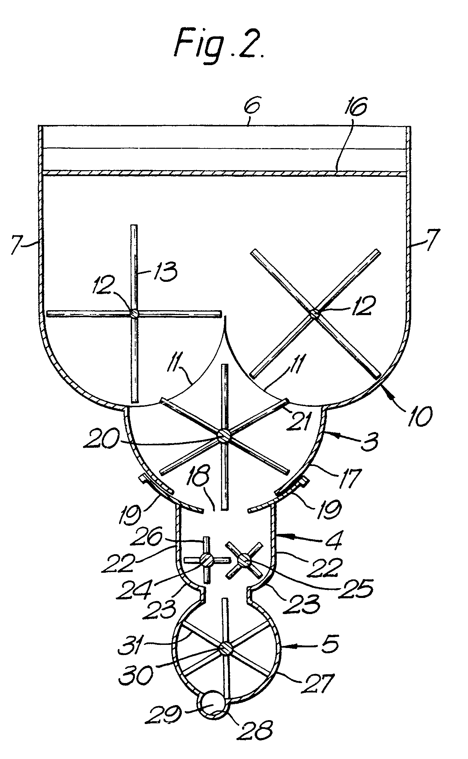

The base of the hopper 10 is formed of two semi-circular troughs 11, with the side walls 7 merging with the outer edges of these troughs and extending vertically upwards. Coaxial with each of these troughs is a shaft 12 which also extends into the store chamber and on which are mounted radially extending members 13 and 14 (not shown in Figure 2). Each blade 14 is set at 90° to the preceding blade in a spiral whilst the members 13, in the store chamber are bars extending through the shaft. Each shaft rotates, generally in the same direction, at a relatively low speed, e.g., 11 rpm. The angle of the blades 14 is chosen, having regard to the rotation of the shaft, so as to move fibres that are fed into the hopper towards the store chamber 2. This chamber preferably has an upper mesh 16 to prevent direct feeding of compressed fibres into the chamber 2.

The chamber 2 merges into the shredder and discharge chamber 3. The base and side walls of this chamber are provided by a substantially semi-cylindrical trough 17 that defines an opening 18 and that controls the rate of flow of fibres into the secondary shredder 4 and the rotary lock 5.

The size of the outlet 18 is regulated by appropriate manual or automatic adjustment of valve gate plates 19 and that provided on appropriate guides (not shown) and that can be slid in or out in order to decrease or increase the size of the outlet and thus the rate of flow of fibres from the chamber 3. The plates 19 have substantially the same curvature as the remainder of the wall 17.

Within the chamber 3 there is a shaft 20 carrying rotor bars 21 arranged at about 30° to each preceding bar, and means (not shown) are provided for rotating the shaft. Although the rotor bars 21 have a radius a little smaller than the radius of the semi cylindrical trough 17 the axis of the shaft 20 is positioned such that the rotor bars sweep the trough 17 over a sufficient part of its surface area to prevent cavitation or blockage, especially near the outlet 18. The curved shape of the side walls, adjacent to where they merge with the remainder of the apparatus, helps minimise any risk of cavitation and blockage.

The rotor 20 generally rotates in the same direction as the rotor in the hopper but at a faster speed, for instance 75 rpm.

The secondary shredder 4 is defined by substantially vertical side walls 22 that merge with part-cylindrical walls 23 that define the base of the secondary shredder. Two shafts, 24 and 25, are mounted for rotation (by means not shown) within the chamber 4 and are positioned substantially coaxially with the wall 23. There are bars 26 mounted on each of the shafts at about 90° to each other. The bars are mounted much more closely than the bars 21 on rotor 20. The bars 26 sweep the walls 22 and 23.

The shafts 24 and 25 preferably rotate in opposite directions, 24 preferably being clockwise and 25 counter-clockwise. With a double shaft arrangement such as this it is very desirable for the radially extending members 26 to intermesh, so as to give a combing effect.

The shafts 24 and 25 rotate faster than the shaft 20 and preferably they rotate at different speeds. For instance shaft 24 may rotate clockwise at 190 rpm and shaft 25 counter-clockwise (in the same direction as the shaft 20) but at 110 rpm. These high speeds cause aeration of the fibre mass entering the chamber 4 and so prepare it for final entrainment in the rotary lock 5. This comprises a cylindrical chamber 27 provided with a groove 28 along its base connected to an air supply 29. A shaft 30 has rotary vanes 31 mounted on it to form a substantially airtight seal with the cylindrical wall of the chamber 27. Fibres from the secondary shredder 4 fall into the space between two adjacent vanes and then become entrained in air supplied along the groove 28 and are blown out of the chamber 5 in conventional manner by outlet 32.

By the invention it is possible to obtain a very uniform degree of separation of the starting compressed mass into fibres (i.e., small fibre tufts) and to obtain a very constant rate of supply of these separated fibres into the rotary air lock 5 and thus into the air stream that leaves the apparatus through the duct 31 on its way to the wall cavity or other location where the fibres are to be injected.

Because of the high degree of separation of the fibres and the uniform supply of the fibres it is possible to inject the fibres very satisfactorily through a small orifice (e.g., 25mm) into the wall cavity and to fill the cavity, to a constant degree of insulation, using a much lower weight of fibres than has previously been required. This lower weight (or lower density) of fibres, for a constant degree of thermal insulation, is possible because of the more uniform distribuiton of the fibres within the cavity, which in turn is due to the greater degree of separation and the more uniform supply of fibres, that is made possible by the present invention, in particular by the avoidance of excess working of fibre tufts in a bale in the hopper.

## Claims

1. Apparatus for producing a stream of mineral fibres entrained in air and which comprises

    separating means for separating a compressed mineral fibre mass into fibres and which comprise

    an elongated feed hopper (1) for receiving a mass and that is closed at two sides (7) and one end (8) but is open at the other end (9) and that includes a rotor for transport of fibres along the hopper, a store chamber (2) into which the open end of the hopper opens, and

    a shredding chamber (3) positioned to receive fibres from the store chamber and that includes one or more rotors (20) for separating the fibres, and

    entraining means (5) positioned for receiving separated fibres from the separating means and for entraining them in air,

    characterised in that the base of the hopper is formed of two or more substantially parallel channels (11) that extend substantially between the ends of the hopper and that are each of substantially part circular cross section

    and in that there is a rotor (12) associated with each channel comprising one or more radially extending members (14) that are of substantially the same radius as the channel and that are mounted for rotation substantially co-axial with the channel and that are shaped to transport the mineral fibres towards the open end of the hopper and into the store chamber upon rotation of the rotor.

2. Apparatus according to claim 1 in which the depth of the hopper (1) is at least three times the radius of the rotors (12).

3. Apparatus according to claim 1 or claim 2 in which substantially the entire base (10) of the hopper is defined by the substantially parallel channels (11) and the side walls (7) of the hopper extend substantially vertically upwards from the outer edges of the channels.

4. Apparatus according to any preceding claim in which each rotor (12) in the hopper (1) is substantially co-axial with its associated channel (11) and extends along substantially the entire length of its associated channel and each radially extending member (14) has substantially the same radius as the associated channel.

5. Apparatus according to any preceding claim in which the store chamber (2) includes means for moving fibres towards the shredding chamber (3) and which cause little or no working of the fibres.

6. Apparatus according to any preceding claim in which protective means are provided over the top of the store chamber (2).

7. Apparatus according to any preceding claim in which the shredding chamber (3) is beneath the store chamber (2) and the one or more rotors (20) of the shredding chamber are positioned in the base (17) of a combined store and shredding chamber at a position below the level of the base (10) of the hopper.

8. Apparatus according to any preceding claim in which the base of the shredding chamber is defined by a lower wall (17) that defines an outlet (18) that discharges into the entraining means and that controls the rate of flow of separated fibres into the entraining means, there are one or more rotors (20) in the discharge chamber (3) each comprising one or more rotatable members (21) mounted for rotation about a substantially horizontal axis and there is a valve (19) for varying the size of the outlet, and substantially all the lower wall of the shredding chamber is concave and is swept by some or all of the rotatable members as they rotate.

9. Apparatus according to claim 8 in which the concave wall (17) of the discharge chamber (3) is a substantially semi-cylindrical trough and the valve (19) has a curved configuration substantially the same as the remainder of the wall.

10. Apparatus according to any preceding claim in which the entrainment means comprise a rotary airlock (5) which is positioned to receive fibres directly or indirectly from the discharge chamber (3) and which comprises a cylinder (27) into which air is fed and which has a rotatable shaft (30) with vanes (31) mounted thereon to provide a substantially airtight seal with the cylinder.

11. Apparatus according to claim 10 comprising the hopper (1), the shredding chamber (3) serving as a primary shredder and fitted with a single rotor (20), a secondary shredder (4) fitted with two rotors (24 and 25) for aeration and further separation of the fibres and the rotary airlock (5) for final entrainment of the fibres, and in which the apparatus includes a gate valve (19) for controlling the supply of fibres to the rotary airlock and positioned between the secondary shredder and the rotary airlock or between the primary shredder and the secondary shredder.

12. A method of producing a stream of mineral fibres entrained in air by use of apparatus according to any preceding claim, and in which each of the said rotors (12) in the base (10) of the hopper rotate at below 20rpm.

**Revendications**

1. Appareil pour produire un jet de fibres minérales entraîné en l'air et qui comprend

   des moyens de séparer une masse de fibres minérales comprimées en fibres et qui comprend

   une trémie d'alimentation allongée (1) pour recevoir une masse et qui est fermée des deux côtés (7) et à une extrémité (8) mais ouverte à l'autre extrémité (9) et qui comporte un rotor pour transporter les fibres le long de la trémie, une chambre d'emmagasinage (2) dans laquelle s'ouvre l'extrémité ouverte de la trémie, et

   une chambre de déchiquetage (3) située de manière à recevoir les fibres de la chambre d'emmagasinage et qui comporte un ou plusieurs rotors (20) pour séparer les fibres, et

   des moyens d'entraînement (5) situés pour recevoir les fibres séparées des moyens de séparation et pour les entraîner en l'air,

   caractérisé en ce que la base de la trémie est formée par deux ou plusieurs rainures substantiellement parallèles (11) qui s'étendent substantiellement entre les extrémités de la trémie et qui sont chacune de coupe en substance partiellement circulaire

   et en ce qu'un rotor (12) est associé à chaque rainure comprenant un ou plusieurs membres s'étendant radialement (14) et qui sont substantiellement de même rayon que la rainure et qui sont montés pour une rotation substantiellement co-axiale avec la rainure et qui sont façonnés pour transporter les fibres minérales vers l'extrémité ouverte de la trémie et dans la chambre d'emmagasinage quand le rotor tourne.

2. Appareil selon la revendication 1, dans lequel la profondeur de la trémie (1) est au moins trois fois le rayon des rotors (12).

3. Appareil selon la revendication 1 ou la revendication 2, dans lequel substantiellement la base entière (10) de la trémie est définie par les rainures substantiellement parallèles (11) et les parois latérales (7) de la trémie s'étendent substantiellement à la verticale vers le haut à partir des bords extérieurs des rainures.

4. Appareil selon l'une quelconque des revendications qui précèdent, dans lequel chaque rotor (12) dans la trémie (1) est substantiellement co-axial avec sa rainure associée (11) et s'étend le long de substantiellement toute la longueur de sa rainure associée et chaque membre s'étendant radialement (14) a substantiellement le même rayon que la rainure associée.

5. Appareil selon l'une quelconque des revendications qui précèdent, dans lequel la chambre d'emmagasinage (2) comporte des moyens pour avancer les fibres vers la chambre de déchyquetage (3) et qui causent peu ou pas de travail des fibres.

6. Appareil selon l'une quelconque des revendications qui précèdent, dans lequel des moyens de protection sont prévus au dessus de la chambre d'emmagasinage (2).

7. Appareil selon l'une quelconque des revendications qui précèdent, dans lequel la chambre de déchiquetage (3) se trouve en dessous de la chambre d'emmagasinage (2) et un ou plusieurs des rotors (20) de la chambre de déchiquetage sont situés dans la base (17) d'une chambre combinée d'emmagasinage et de déchiquetage à une position en dessous du niveau de la base (10) de la trémie.

8. Appareil selon l'une quelconque des revendications qui précèdent, dans lequel la base de la chambre de déchiquetage est définie par une paroi inférieure (17) qui définit une sortie (18) déchargeant dans le moyen d'entraînement et qui contrôle le débit des fibres séparées dans le moyen d'entraînement; il y a un ou plusieurs rotors (20) dans la chambre de décharge (3) chacun comprenant un ou plusieurs membres tournants (21) montés pour tourner autour d'un axe substantiellement horizontal et il y a un clapet (19) pour varier la dimension de la sortie et substantiellement toute la paroi inférieure de la chambre de déchiquetage est concave et balayée par quelques ou tous les membres rotatifs quand ils tournent.

9. Appareil selon la revendication 8, dans lequel la paroi concave (17) de la chambre de décharge (3) est une auge substantiellement semi-cylindrique et le clapet (19) a une configuration courbe substantiellement la même que le reste de la paroi.

10. Appareil selon l'une quelconque des revendications qui précèdent, dans lequel les moyens d'entraînement comprend un sas à air rotatif (5), qui est positionné pour recevoir les fibres directement ou indirectement de la chambre de décharge (3) et qui comprend un cylindre (27) dans lequel l'air est alimenté et qui a un arbre rotatif (30) doté de pales (31) pour assurer un joint substantiellement étanche avec le cylindre.

11. Appareil selon la revendication 10, comprenant la trémie (1), la chambre de déchiquetage (3) servant de déchiqueteur primaire et doté d'un rotor unique (20), un déchiqueteur secondaire (4) doté de deux rotors (24 et 25) pour l'aération et une autre séparation des fibres et le sas à air rotatif (5) pour l'entraînement final des fibres, et dans lequel l'appareil comprend un clapet à porte (19) pour contrôler l'alimentation des fibres au sas à air rotatif et positionné entre le déchiqueteur secondaire et le sas à air rotatif ou entre le déchiqueteur primaire et le déchiqueteur secondaire.

12. Méthode de production d'un jet de fibres minérales entraînées en l'air par l'emploi d'un appareil selon l'une quelconque des revendications qui précèdent, et dans lequel chacun desdits rotors (12) de la base (10) de la trémie tourne à moins de 20 t/m.

**Patentansprüche**

1. Vorrichtung zum Herstellen eines Stromes von in Luft mitgeführten Mineralfasern, und die Trennmittel umfasst, um eine zusammengedrückte Mineralfasermasse in Fasern zu trennen, und die folgendes umfassen:

einen gestreckten Zufuhrtrichter (1), um eine Masse zu empfangen, und der an zwei Seiten (7) und einem Ende (8) geschlossen, aber an dem anderen Ende (9) offen ist, und der einen Rotor zum Transportieren von Fasern entlang des Trichters einschliesst, eine Speicherkammer (2), in die sich das offene Ende des Trichters öffnet, und

eine Zerfaserungskammer (3), die so gelagert ist, um Fasern von der Speicherkammer zu empfangen und die einen oder mehrere Rotoren einschliesst, um die Fasern zu trennen, und

Mitführungsmittel (5) die so gelagert sind, um getrennte Fasern von den Trennmitteln zu empfangen und um sie in Luft mitzuführen, dadurch gekennzeichnet, dass der Boden des Trichters von zwei oder mehreren im wesentlichen parallelen Kanälen (11) gebildet ist, die sich im wesentlichen zwischen den Enden des Trichters erstrecken und die je einen im wesentlichen teilweise runden Querschnitt haben, und dass jedem Kanal ein Rotor (12) zugeordnet ist, der ein · oder mehrere sich radial erstreckende Glieder (14) umfasst, die im wesentlichen denselben Radius wie der Kanal haben, und die zur Drehung im wesentlichen koaxial mit dem Kanal angebracht sind, und die geformt sind, um die Mineralfasern auf das offene Ende des Trichters und in die Speicherkammer zu transportieren, wenn der Rotor gedreht wird.

2. Vorrichtung nach Anspruch 1, in der die Tiefe des Trichters (1) wenigstens das dreifache des Radius des Rotors (12) ist.

3. Vorrichtung nach Anspruch 1 oder Anspruch 2, in der im wesentlichen der ganze Boden (10) des Trichters durch die im wesentlichen parallelen Kanäle (11) definiert ist, und die Seitenwände (7) des Trichters sich im wesentlichen senkrecht nach oben von den äusseren Kanten des Kanals erstrecken.

4. Vorrichtung nach einem der vorhergehenden Ansprüche, in der jeder Rotor (12) in dem Trichter (1) im wesentlichen koaxial mit dem ihm zugeordneten Kanal (11) ist, und sich im wesentlichen entlang der ganzen Länge seines ihm zugeordneten Kanals erstreckt, und wobei jedes sich radial erstreckende Glied (14) im wesentlichen denselben Radius wie der zugeordnete Kanal hat.

5. Vorrichtung nach einem der vorhergehenden Ansprüche, in der die Speicherkammer (2) Mittel zum Bewegen von Fasern zur Zerfaserungskammer (3) einschliesst, und die wenig oder kein Bearbeiten der Fasern hevorrufen.

6. Vorrichtung nach einem der vorhergehenden Ansprüche, in der Schutzmittel über dem Oberteil der Speicherkammer (2) vorgesehen sind.

7. Vorrichtung nach einem der vorhergehenden Ansprüche, in der die Zerfaserungskammer (3) unter der Speicherkammer (2) ist, und der eine oder die mehreren Rotoren (20) der Zerfaserungskammer auf dem Boden (17) einer kombinierten Speicher- und Zerfaserungskammer in einer Stellung unter dem Stand des Bodens des Trichters gelagert sind.

8. Vorrichtung nach einem der vorhergehenden Ansprüche, in der der Boden der Zerfaserungskammer durch eine untere Wand (17), die einen Auslass (18) definiert, definiert ist, der sich in das Mitführungsmittel entlädt, und der die Flussrate von getrennten Fasern in die Mitführungsmittel kontrolliert, wobei ein oder mehrere Rotoren (20) in der Entladungskammer (3) sind, wobei jeder ein oder mehrere drehbare Glieder (21) enthält, die zur Drehung um eine im wesentlichen horizontale Achse angebracht sind, und ein Ventil (19) vorhanden ist, um die Grösse des Auslasses zu ändern, und im wesentlichen die ganze untere Wand der Zerfaserungskammer konkav ist und von einigen oder allen der drebaren Gliedern überstrichen wird, während sie sich drehen.

9. Vorrichtung nach Anspruch 8, in der die konkave Wand (17) der Entladungskammer (3) ein im wesentlichen halbzylindrischer Trog ist, und das Ventil (19) eine gekrümmte Gestalt hat, die im wesentlichen dieselbe wie der Rest der Wand ist.

10. Vorrichtung nach einem der vorhergehenden Ansprüche, in der die Mitführungsmittel eine sich drehende Luftschleuse (5) umfassen, die so gelagert sind, um Fasern direkt oder indirekt von der Entladungskammer (3) zu empfangen, und die einen Zylinder (27), in den Luft eingeführt wird, umfassen, und der eine drehbare Welle (30) mit darauf angebrachten Flügeln (31) hat, um einen im wesentlichen luftdichten Verschluss mit dem Zylinder vorzusehen.

11. Vorrichtung nach Anspruch 10, die den Trichter (1) umfasst, die Zerfaserungsmaschine (3), die als Hauptzerfaserer dient und mit einem einzigen Rotor (20) ausgestattet ist, einen Nebenzerfaserer (4), der mit zwei Rotoren (24 und 25) zum Lüften und weiteren Trennen der Fasern ausgestattet ist, und der sich drehenden Luftschleuse (5) zum endgültigen Mitführen der Fasern, und in der die Vorrichtung ein Schleusenventil (19) einschliesst, um die Versorgung von Fasern zu der sich drehenden Luftschleuse zu kontrollieren, und das zwischen dem Nebenzerfaserer und der sich drehenden Luftschleuse, oder zwischen dem Hauptzerfaserer und dem Nebenzerfaserer gelagert ist.

12. Verfahren zum Herstellen eines Stromes von in Luft mitgeführten Mineralfasern durch Gebrauch einer Vorrichtung nach einem der vorhergehenden Ansprüche, und in dem sich jeder der Rotoren (12) auf dem Boden (10) des Trichters bei unter 20 UpM dreht.

# Fig.1.

# Fig.2.

# Fig.3.

# Fig.4.